# EUROPEAN PATENT SPECIFICATION

(11) **EP 4 456 574 B1**
(45) Date of publication and mention of the grant of the patent: **03.06.2026**
(21) Application number: 23746142.1
(22) Date of filing: 17.01.2023
(51) Int. Cl.: H04W 4/40, H04W 4/46, H04L 67/51, H04L 69/24

(54) **INTERNET OF VEHICLES INFORMATION PROCESSING METHOD, APPARATUS, DEVICE, AND SYSTEM**
VERFAHREN, VORRICHTUNG, VORRICHTUNG UND SYSTEM ZUR INFORMATIONSVERARBEITUNG ÜBER INTERNET VON FAHRZEUGEN
PROCÉDÉ, APPAREIL, DISPOSITIF ET SYSTÈME DE TRAITEMENT D'INFORMATIONS DE L'INTERNET DES VÉHICULES

(30) Priority: 30.01.2022 CN 202210114414
(43) Date of publication of application: 30.10.2024
(73) Proprietor: CICT Connected and Intelligent Technologies Co., Ltd., Chongqing 400041 (CN)
(72) Inventor: ZHANG, Xueyan, Chongqing 400040 (CN); LI, Chenxin, Chongqing 400040 (CN); ZHENG, Shilei, Chongqing 400040 (CN)
(74) Representative: Murgitroyd & Company
(86) International application number: PCT/CN2023/072649
(87) International publication number: WO 2023/143260

(56) References cited:
- WO-A1-2018/228527
- WO-A1-2020/147968
- CN-A- 110 351 683
- CN-A- 112 309 152
- CN-A- 113 038 418
- CN-A- 113 196 361
- KR-A- 20190 011 488
- US-A1- 2013 159 537
- US-A1- 2019 110 178
- US-A1- 2019 239 118
- US-A1- 2021 266 726

## Description

### CROSS-REFERENCE TO RELATED APPLICATIONS

The present disclosure claims priority to Chinese Patent Application No. 202210114414.1, filed in China on January 30, 2022.

### TECHNICAL FIELD

The present disclosure relates to the technical field of communications, and in particular, to an information processing method and apparatus for vehicle-to-everything (V2X), a device, and a system.

### BACKGROUND

Currently, in advanced applications of Cellular-V2X (C-V2X), a vehicle may send its intention to a surrounding vehicle or roadside infrastructure, to request the surrounding vehicle or the roadside infrastructure to cooperate in executing a specific application or function.

However, in practical application process, the following problem exists.

When an application is not triggered, an on-board unit (OBU) of the vehicle broadcasts only a basic safety message (BSM). Other vehicles fail to determine the intention or capabilities of the transmitting vehicle (for example, whether the vehicle has a capability of sensor data sharing) based on the BSM.

A roadside unit (RSU) on a road fails to choose the range of a broadcast or cooperation capability. For example, the RSU has a variety of cooperation capabilities. If all the capabilities are triggered, spectrum resources may be over occupied when no vehicle with a corresponding advanced application exists within the coverage range of the RSU. If only part of the capabilities are triggered, the advanced application fail to manifest its advantages.

Therefore, it is difficult to align the capability of one vehicle with that of another vehicle or an RSU. US2019239118A1 provides techniques for managing vehicle-to-everything capability convergence protocol in new radio (NR). For example, the techniques may include identifying a reference user equipment capability, identifying capability information of a first user equipment and broadcasting/transmitting a capability message using the reference user equipment capability, wherein the capability message may include the capability information of the first user equipment. US2019110178A1 is directed to vehicle techniques for selecting communication options for V2X type communications. Certain aspects provide a method for wireless communication by a user-equipment (UE). The method generally includes receiving one or more parameters for selection of one or more features associated with one or more radio-access technology (RATs), and selecting the one or more features to be used for communicating with one or more other UEs using a V2X communication protocol. The selection of the one or more features may be based on the one or more parameters. The method may also include communicating with the one or more other UEs via the selected one or more features. WO2020147968A1 discloses that a V2X communication device receives service information in a first frequency spectrum. The service information indicates availability of at least one V2X communication service in a second frequency spectrum. Based on the received service information, the V2X communication device controls utilization of one or more V2X communication services by the V2X communication device, e.g., whether to start utilizing the at least one V2X service and/or whether to stop utilizing another V2X service.

US2021/266726A1 discloses the exchange of supportable services between vehicles

### SUMMARY

The present disclosure provides an information processing method and apparatus for V2X, a device, and a system, to resolve a problem of enormous communication complexity and low efficiency resulted from difficulties in identifying specific capability of one device by another involved in V2X.

The invention is as defined in the appended set of claims.

### BRIEF DESCRIPTION OF THE DRAWINGS

FIG. 1 is a flowchart of an information processing method for V2X according to an embodiment of the present disclosure.
FIG. 2 is a flowchart of an information processing method for V2X according to another embodiment of the present disclosure.
FIG. 3 is a structural block diagram of an information processing apparatus for V2X according to an embodiment of the present disclosure.
FIG. 4 is a structural block diagram of an information processing apparatus for V2X according to another embodiment of the present disclosure.
FIG. 5 is a structural block diagram of a device according to an embodiment of the present disclosure.

### DETAILED DESCRIPTION OF THE EMBODIMENTS

To make the technical problems to be resolved, technical solutions, and advantages of the present disclosure clearer, the following describes the present disclosure in detail with reference to the accompanying drawings and specific embodiments. In the following description, specific details such as specific configuration and components are provided only to help fully understand embodiments of the present disclosure. Therefore, a person skilled in the art should understand that various changes and modifications may be made to the embodiments described herein without departing from the scope of the present disclosure. In addition, for clarity and simplicity, descriptions of known functions and constructions are omitted.

It should be understood that, "one embodiment" and "an embodiment" throughout this specification means that specific features, structures or characteristics related to the embodiments may be included in at least one embodiment of the present disclosure. Therefore, descriptions of "in one embodiment" or "in an embodiment" in various paragraphs throughout this specification do not necessarily refer to the same embodiment. In addition, the specific features, structures, or characteristics may be combined in one or more embodiments in any appropriate manner.

In embodiments of the present disclosure, it should be understood that, sequence numbers of the foregoing processes do not mean execution sequences. The execution sequences of the processes should depend on functions and internal logic of the processes, and should not be construed as any limitation on the implementation processes of embodiments of the present disclosure.

The terms "system" and "network" in this specification may often be used interchangeably.

In embodiments of the present application, it should be understood that, "B that corresponds to A" means that B is associated with A, and B can be determined based on A. However, it should be further understood that determining B based on A does not mean that B is determined based on only A. B may alternatively be determined based on A and/or other information.

In embodiments of the present disclosure, an access network may be in various forms, for example, an access network including a macro base station a pico base station, a 3G mobile base station (Node B), an enhanced base station (eNB), a home enhanced base station (Femto eNB or Home eNode B or Home eNB or HeNB), a relay station, an access point, a remote radio unit (RRU), a remote radio head (RRH), or the like. A user terminal may be a mobile phone (or a cell phone), or another device that can send or receive a wireless signal, including user equipment, a personal digital assistant (PDA), a wireless modem, a wireless communications apparatus, a handheld apparatus, a laptop computer, a cordless phone, a wireless local loop (WLL) station, a customer-premises equipment (CPE) or a mobile smart hotspot that can convert a mobile signal into a wireless fidelity (WiFi) signal, a smart household appliance, a device that can communicate with a mobile communications network automatically, or the like. Based on an intra-vehicle network, an inter-vehicle network, and a vehicle-mounted mobile internet, V2X is a large system network that implements wireless communication and information exchange between a vehicle and X (representing a vehicle, a road, a pedestrian, the internet, or the like) according to agreed communication protocols and data exchange standards. V2X is an integrated network that can implement intelligent traffic management, intelligent dynamic information services, and intelligent vehicle control, and is a typical application of an internet of things technology in the field of transportation systems. A terminal device involved in V2X includes an OBU, an RSU, and the like.

In scenarios such as sensor data sharing, cooperative lane change, cooperative vehicle merge, cooperative intersection passing, dynamic lane management, cooperative high priority vehicle passing, guidance service in parking area, and probe data collection, intention information, that is, vehicle intention and request (VIR), and cooperation information, that is, roadside coordination (RSC), a sensor sharing message (SSM), a parking area map (PAM), or the like may be exchanged between vehicles or between a vehicle and an RSU.

The related standard only defined the specific data content that should be included in the foregoing messages, without defining how to use these messages. For example, when does a vehicle send a VIR message and when does a receiver (for example, a vehicle or an RSU) start to send cooperation information are not specified.

Currently, an OBU or an RSU generally broadcasts a null VIR message (only basic information, no specific request information) or a null RSC message (only basic information, no specific coordination information) in the test demonstrations, indicating that the vehicle or RSU has a capability of executing advanced applications. For example, the OBU of the vehicle (where a vehicle A is used as an example) periodically broadcasts a null VIR message. Once the OBU of a surrounding vehicle (where a vehicle B is used as an example) receives the message, the vehicle B may identify that the vehicle A has the capability of executing advanced applications, and may send a cooperation request to the vehicle A, for example, in a scenario such as cooperative lane change.

However, in the manner in which the OBU and the RSU send null messages, that is, the VIR and the RSC, although it can be identified that the vehicle and RSU have the capability of executing advanced applications, the following disadvantages exist.
(1) Both the OBU and the RSU fail to identify the specific capability of each other. For example, when the OBU and the RSU support a variety of advanced application scenarios, further interaction is required between the two parties to identify the specific capability of each other.
(2) When some functions in a capability list supported by the OBU and the RSU become invalid, the two parties need to further interact with each other to exchange the information, which increases complexity of a communication process.
(3) In most cases, the vehicle and the RSU may not need cooperation. A large quantity of null messages will lower spectrum utilization and impose a higher requirement on processing capabilities of the OBU and the RSU device.
(4) If an advanced application that needs to be triggered requires a relatively high penetration rate, the OBU and/or the RSU need to interact with all surrounding vehicles to identify a penetration rate of a surrounding environment. When the learning is finished, the optimal execution time of the application may have been missed.

Specifically, embodiments of the present disclosure provide an information processing method and apparatus for V2X, a device, and a system, which resolve the problem of enormous communication complexity and low efficiency resulted from difficulties in identifying a specific capability of one device by another involved in V2X existing in the related technology.

### Embodiment 1

An embodiment of the present disclosure provides a communications system for V2X, including a first device and a second device. Specifically, the first device and the second device communicate based on preset target information, and the target information is used to determine a capability of a second target device to execute a target service.

It should be noted that the first device and the second device may be devices involved in V2X, for example, the first device may be an RSU, or an OBU. The target information is information defined in this embodiment of the present disclosure and related to a service capability of the second target device. The target information may be understood as a service capability set of the second target device. When the first device sends the target information to the second device, the first device acts as the second target device. When the second device sends the target information to the first device, the second device acts as the second target device. In this way, when performing communication based on the target information, the first device and the second device may identify a service capability set of each other, that is, may identify a capability of each other to execute a specific service, for example, a capability to execute a cooperative lane change service.

In an embodiment of the present disclosure, the target information includes service capability information. The service capability information includes first service capability information and/or second service capability information. The first service capability information is used to indicate a currently activated service capability of the second target device. The second service capability information is used to indicate a currently inactivated service capability of the second target device. The second target device is a device that sends the target information.

Herein, the second target device may send the target information in any manner of broadcast, unicast, or multicast, which is not limited herein.

In this embodiment, the service capability set may be device characteristic information, or a capability of the second target device (that is, a currently activated service capability of the second target device). Alternatively, the service capability set is a function (or a service) that can be supported by the second target device, or a function (or a service) that the second target device currently wants to support, or the like, that is, a currently inactivated service capability of the second target device.

In an optional embodiment of the present disclosure, the target information may be implemented at an application layer, or a network layer.

Case 1: The target information is implemented at the application layer. In this case, the target information may be carried by using data content carried in a message. Specifically:

The target information may be carried by using an extended existing message, or may be carried by using a new message.

For example, when the target information is carried by using an extended existing message, a vehicle may carry the target information by using an extended BSM message. A RSU may carry the target information by using an extended signal phase timing message (SPAT), a map message (MAP), roadside information message (RSI), or a roadside message (RSM), depending on a function supported by the RSU. For example, if the RSU supports only dissemination of a traffic light message (SPAT message) and cooperation between vehicles at an intersection, the RSU may carry the target information on an extended SPAT message.

It should be noted that, in case 1, if sending of the target information is implemented by sending a new message (for example, broadcasting the target information), embodiments of the present disclosure can transfer more useful information than a related solution under equal spectrum resources. If the sending of the target information is implemented by sending an extended existing message (for example, a BSM message), in addition to transferring more useful information, a large quantity of spectrum resources can be saved.

Case 2: The target information is implemented at the network layer. In this case, a message layer sends a request to a Wireless Access in Vehicular Environment (WAVE) management entity (WME) at the network layer by using a primitive, and the network layer carries the request by using a WAVE short message (WSM) or a WAVE service advertisement (WSA). Specifically:

If a WSM is used to carry the request, an extended field indicator may be set to 1 in a WAVE short message protocol (WSMP) header (Header), and the target information is stored in an extended field according to the data format.

If a WSA is used to carry the request, two manners are included: a header and application information (Application Info).

Manner 1: WSA Header field extension: A header extended field of the WSA is set to 1, and the target information is stored in the header extended field according to the data format.

Manner 2: WSA Application Info field extension: The target information is stored according to the data format.

Optionally, the service capability information includes at least one of the following:
service information, that is, a list of application scenarios, for example, application scenarios such as cooperative lane change, cooperative vehicle merge, and cooperative platooning;
a message set, that is, a list of message sets, such as VIR and RSC;
service category information, that is, a list of application scenario categories, for example, application scenario types such as intention and cooperation, traffic management, and sensor data sharing;
service level information, that is, a list of application scenario levels, for example, Day 1, Day 2, and high-level automated driving;
application identifier (AID) information, that is, a list of AIDs, for example, an AID 1 and an AID 2;
provider service identifier (PSID) information, that is, a list of PSIDs, for example, a PSID 1 and a PSID 2; or
privacy protection requirement information, that is, a privacy protection requirement, for example, anonymization and encryption, anonymization only, or encryption only.

Herein, the service capability information may be understood as a service set of the second target device (for example, the first device). The service capability information may be a capability of the second target device (that is, a currently activated service capability of the second target device). Alternatively, the service capability information is a function (or a service) that can be supported by the second target device, a function (or a service) that the second target device currently wants to support, or the like, that is, a currently inactivated service capability of the second target device.

Optionally, the service capability information further includes one of the following:
role information, used to indicate whether a device is a provider or a requester, for example, whether to provide shared data in a sensor data sharing scenario;
capability information: the number of devices that can be supported by different services, for example, the number of devices that support sharing or the number of devices that support cooperation; or
protocol information: a protocol (or data) format supported by a specific service, for example, video resolution or a video protocol.

That is, when a service capability set is a service set, the service capability information may further include a capability of a device to support a service in the set, including but not limited to role information, capability information, and protocol information.

Optionally, the device characteristic information includes device-related information and device-inherent or currently supported capability information, which may specifically be:
(1) The device-related information includes at least one of the following:
   a device type, for example, an OBU or an RSU;
   owner information, such as a brand of a device, an operator, and owner of the device;
   a wireless access type, for example, long-term evolution (LTE)-V2X side link (SL) only, new radio (NR)-V2X SL only, or LTE-V2X SL and NR-V2X SL;
   an intelligence level, that is, a vehicle automated driving level, such as L1 to L5;
   connection information, that is, a list of connection levels of a device, for example, connection auxiliary information interaction, connection cooperative sensing, and connection cooperative decision-making and control; or
   a version of a supported protocol, for example, T/CSAE 53-2017 or YD/T 3709-2020.
(2) The device-inherent or currently supported capability information includes at least one of the following:
   sensing capability information, indicating a sensing capability, such as a sensor type, a sensing range, or sensing precision;
   positioning capability information, indicating a positioning capability, for example, a capability such as real-time kinematic (RTK) or a global navigation satellite system (GNSS);
   platooning capability information, indicating a platooning capability, for example, a capability such as navigation or follow-up;
   function safety level information, that is, a function safety level, for example, capabilities such as automotive safety integration levels (ASIL) A to D; or
   a sensing data type, that is, a data content category, such as vehicle dynamic driving information, traffic participant information, or obstacle information.

In this embodiment of the present disclosure, a first device and a second device perform communication by using target information, so that the first device and the second device identify the capability of each other to execute a first service. That is, a second target device (for example, the second device) may determine, based on a status of a capability of a surrounding device (for example, the first device) to execute the first service, configuration of a safety (or cooperation) policy of the second device, or whether to trigger an application and to trigger which type of application, or another related communication or cooperation policy. In this way, the problem of enormous communication complexity and low efficiency resulted from difficulties in identifying the specific capability of one device by another involved in V2X can be solved. Therefore, spectrum utilization can be improved.

### Embodiment 2

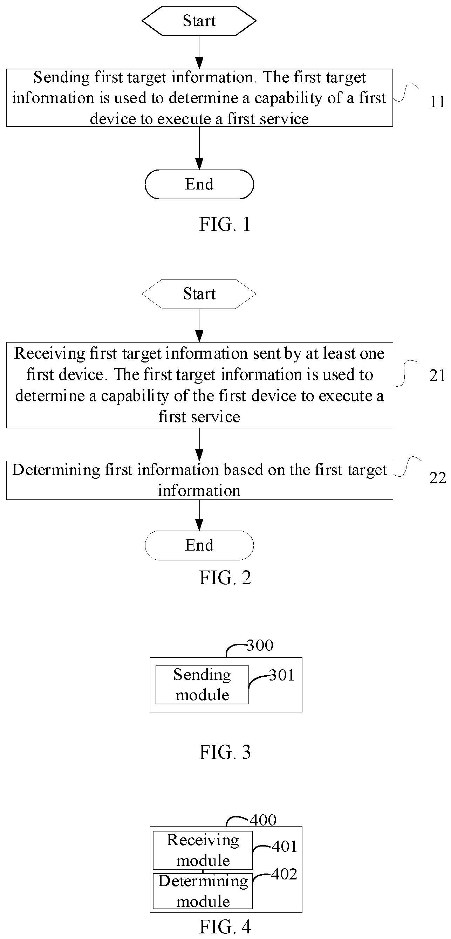

As shown in FIG. 1, an embodiment of the present disclosure provides an information processing method for V2X. The method is applied to a first device and specifically includes the following steps.

Step 11: Sending first target information. The first target information is used to determine a capability of the first device to execute a first service.

It should be noted that the first device may be a V2X device, for example, an RSU or an OBU. The first device may send the first target information in any manner of broadcast, unicast, and multicast, which is not limited herein.

Herein, the first target information may be understood as a service capability set of the first device, and the first service may be a V2X service, for example, a cooperative lane change service.

According to the information processing method provided in this embodiment of the present disclosure, a device sends a target message (for example, a first device sends a first target message), and notifies a surrounding device (for example, a second device, that is, an RSU or an OBU) of a service capability set (and intention information) of transmitted device in an explicit manner. In this way, the surrounding device may determine, based on the target message, a specific capability of the device to execute a service. In this case, when determining whether to trigger an application, a vehicle may explicitly obtain information about the surrounding (that is, a surrounding device, for example, a RSU or another vehicle, which may specifically be an OBU on the other vehicle), and whether the application can be supported. If neither a surrounding vehicle nor a RSU supports a related application, the first device may stop sending the target message, thereby saving resource.

The first target information includes service capability information. The service capability information includes first service capability information and/or second service capability information. The first service capability information is used to indicate a currently activated service capability of the first device. The second service capability information is used to indicate a currently inactivated service capability of the first device.

It should be noted that the currently inactivated service capability of the first device refers to a service capability that can be activated but is not activated yet on the first device, or a service capability that the first device wants to activate.

In this embodiment, the first target information may be understood as a service capability set of the first device. The service capability set may be device characteristic information, or may be a capability of the first device (that is, a currently activated service capability of the first device). Alternatively, the service capability set is a function (or a service) that can be supported by the first device, a function (or a service) that the first device currently wants to support, or the like, that is, a currently inactivated service capability of the first device.

It should be noted that for specific content, explanations, implementations, and examples of the first target information (that is, the device characteristic information and the service capability information) in this embodiment of the present disclosure, reference can be made to the target information in Embodiment 1, and details are not described herein again.

In an optional embodiment of the present disclosure, the service capability information includes at least one of the following: service information, a message set, service category information, service level information, AID information, PSID information, or privacy protection requirement information. The service capability information further includes one of the following: role information, capability information, or protocol information. The device characteristic information includes at least one of the following: a device type, owner information, a wireless access type, an intelligence level, connection information, a version of a supported protocol, sensing capability information, positioning capability information, platooning capability information, function safety level information, or a sensing data type.

Optionally, the method further includes:
obtaining second target information corresponding to at least one second device, where the second target information is used to determine a capability of the second device to execute the first service; and
updating the first target information according to the second target information or adjusting a sending manner of the first target information to the second target information.

In this embodiment, after the first device sends the first target information, the first device may further adjust the first target information to second target information sent by a surrounding device (for example, an OBU or an RSU) involved in the V2X, that is, adjust the service capability set of the first device. Specifically, the specific content of the first target information may be adjusted, or the sending manner of the first target information may be determined and adjusted (for example, a frequency at which the first target information to be sent may be adjusted).

Optionally, in a case in which the first device obtains the second target information within a preset time period, and the second target information indicates that the capability of the second device to execute the first service matches the capability of the first device to execute the first service, the updating the first target information according to the second target information includes one of the following:
in a case in which a level of the capability of the second device to execute the first service is lower than a level of the capability of the first device to execute the first service, adjusting a service capability of the first device to match the level of the capability of the second device; or
in a case in which the first service is executable by a currently inactivated service capability of the second device, adding capability request information to the first target information, where the capability request information is used to request the second device to activate the capability to execute the first service.

It should be noted that, in this embodiment, a case in which the capability of the second device to execute the first service matches the capability of the first device to execute the first service includes: that the capability of the second device to execute the first service is the same as the capability of the first device to execute the first service, or the capability of the second device to execute the first service and the capability of the first device to execute the first service have different capability magnitudes (or levels).

In this embodiment, the first device may negotiate with the second device based on the capability request information, so that the second device adjusts a capability. For example, the first device negotiates with the second device, requesting the second device to activate a service capability to execute the first service. That is, this embodiment of the present disclosure may provide a service capability negotiation mechanism in a C-V2X communication process, to implement service capability negotiation between a device and a surrounding device. If a supportable list of the first device overlaps that of the surrounding device (that is, the second device), but a currently supported list of the first device does not overlap that of the surrounding device, the device may negotiate with the surrounding device by sending a service set that the device hopes the surrounding device to support.

Optionally, in a case in which the first device does not obtain the second target information within a preset time period, or in a case in which the second target information indicates that a capability of no second device to execute the first service matches the capability of the first device to execute the first service, the adjusting a sending manner of the first target information to the second target information includes one of the following:
deleting the first service capability information corresponding to the first service;
stopping sending the first target information; or
adjusting a frequency of sending the first target information.

That is, the first device may determine the sending manner of the first target information based on whether the second target information has been obtained and specific content of the obtained second target information. For example, when the first device is an OBU, if a service capability set (that is, the second target information sent by the second device) of the surrounding vehicle does not overlap the first target information, or no surrounding vehicle sends a service capability set, the first device may stop sending the first target information, or may reduce a frequency of sending the first target information, or may adjust the specific content of the first target information. For example, the first service capability information corresponding to the first service in the first target information is deleted, and then the updated first target information is continued to be sent. In this way, the communication process can be simplified, and spectrum utilization can be improved.

Optionally, the method further includes: obtaining second target information corresponding to at least one second device, where the second target information is used to determine a capability of the second device to execute the first service; in a case in which the first device is about to execute the first service, determining, from the at least one second device based on the second target information, a first target device that has a service capability to execute the first service; and performing communication related to the first service with the first target device.

In this embodiment, the first device may determine, based on the second target information, the capability of the second device to execute the first service, and further may determine, from the at least one second device, the first target device whose capability to execute the first service matches the first device. The first target device may interact with the first device immediately or as needed. That is, the second target information received by the first device may be used to select a target object (that is, the first target device) with which the first device is to interact, and determine content of a message that needs to be sent in a subsequent interaction process. For example, a surrounding automated driving vehicle may be selected to perform cooperative platooning driving.

The following describes the solution provided in this embodiment of the present application by examples.

For example, the first device is an OBU. When a vehicle (for example, a vehicle A) performs a connection function, an OBU on the vehicle may continuously and periodically broadcast a service capability set (that is, first target information) of the OBU. Herein, it should be noted that an application scenario in the service capability set is within a scenario list obtained after an industry agreement is reached. The vehicle selects a scenario that the vehicle currently wants to execute, sets a related state of the scenario to enabled, and sets a related state of another scenario to disabled. In this case, a RSU around the vehicle A may also broadcast a cooperative service capability set supported by the RSU, and an OBU on another vehicle (for example, a vehicle B) around the vehicle A may also broadcast a cooperative service capability set supported by the OBU.

When the vehicle A is about to perform cooperative lane change, the scenario may be implemented by vehicle to vehicle (V2V) cooperation, or vehicle to infrastructure (V2I) cooperation. Specifically, assuming that the vehicle A travels on a road and needs to turn to a right lane, and the vehicle A hopes to complete a current lane change process by using cooperative lane change, a process of communication between the vehicle A and the vehicle B or the RSU is described as follows.

The OBU of the vehicle A may identify the service capability set of a surrounding vehicle (for example, the vehicle B) by receiving second target information sent by the surrounding vehicle, and further determine whether the vehicle B supports a cooperative lane change scenario within a specific range (for example, 100 meters) at the right rear of the vehicle A or whether an RSU within a coverage range supports cooperative lane change.

If neither the surrounding vehicle B nor the RSU supports the cooperative lane change scenario, the cooperative lane change scenario may be deleted from a service list of the first target information of the vehicle A. If one or both of the vehicle B and the RSU support the cooperative lane change scenario, the vehicle A may further include a cooperative lane change scenario of V2V or V2I in the service list of the first target information.

For another example, if no vehicle around the vehicle A requires a sensor data sharing service, the OBU of the vehicle A may not send a sensing capability in the first target information, for example.

In other words, the first device may adjust content of the first target information to an application supported by surroundings (that is, the second device).

In this embodiment of the present disclosure, by sending first target information, a second device around a first device may identify a capability of the first device to execute a first service. Therefore, the second device may determine configuration of a safety (or cooperation) policy of the second device based on a status of the capability of the first device to execute the first service, or determine whether to trigger an application and to trigger which type of application, or determine another communication or cooperation policy related to the first device. In this way, the problem of enormous communication complexity and low efficiency resulted from difficulties in identifying the specific capability of one device by another involved in V2X can be solved. Therefore, spectrum utilization can be improved.

### Embodiment 3

As shown in FIG. 2, an embodiment of the present disclosure provides an information processing method for V2X. The method is applied to a second device and specifically includes the following steps.

Step 21: Receiving first target information sent by at least one first device. The first target information is used to determine the capability of the first device to execute a first service.

Step 22: Determining first information based on the first target information.

In this embodiment, after receiving the first target information, the second device may determine the first information based on the first target information, and further use the first information for information interaction or internal configuration, for example, determine whether to trigger an application and trigger which type of application, or determine another communication or cooperation policy related to the first device. This can simplify communication and improve spectrum utilization.

Optionally, the first information includes at least one of the following:
(1) the capability of the first device to execute the first service, or
(2) identity information of a first target device whose capability to execute the first service matches the second device.

The second device may determine, based on the first target information, the capability of the first device to execute the first service, and further may determine, from the first device, the first target device whose capability to execute the first service matches the second device. The first target device may interact with the first device immediately or as needed. That is, the second target information received by the first device may be used to select a target object (that is, the first target device) with which the first device is to interact, and determine content of a message that needs to be sent in a subsequent interaction process. For example, a surrounding automated driving vehicle may be selected to perform platoon driving.

For example, the second device is an OBU of a vehicle A. It is assumed that the vehicle A can parse all Day1 message sets and Day2 message sets. However, no sensor is installed on the vehicle A, or the capability level of an installed sensor is low, the vehicle A can only receive an SSM message, but cannot compile sensing data of the vehicle A into an SSM message to notify the surrounding vehicles. That is, the vehicle A can participate in a sensor data sharing scenario with receiving only rather than sending. Therefore, the vehicle A sets, in second target information to be broadcast, that a Day1 (vehicle dynamic driving information) is supported.

In this case, if no vehicle around the vehicle A supports a level 2 (level 1 plus traffic participant information) and a level 3 (level 2 plus obstacle information), the vehicle A unnecessarily send a sensor sharing request. If a vehicle B supports the level 3, that is, it is set in first target information sent by an OBU of the vehicle B that the vehicle dynamic driving information, the traffic participant information, and the obstacle information are supported, and a vehicle C supports the level 2, for safety reasons, the vehicle A may select data content with finer granularity, that is, the vehicle A selects the vehicle B to trigger a sensor sharing application. That is, the vehicle A sends a sensor sharing request to the vehicle B.

Further, the vehicle A may set, in the first target information, that a role of the vehicle A in a sensor sharing scenario to a requester, and the vehicle B feeds back a role, a capability, a protocol format, and the like of the vehicle B.

(3) configuration information of the second device related to the first device.

It should be noted that the second device may configure a safety (or cooperation) policy according to the received first target information, that is, determine the configuration information of the second device related to the first device. For example, the second device may allocate different safety policies to different vehicles according to an intelligence level and connection information (for example, a connection level) in first target information of a surrounding vehicle. For example, for a vehicle with a high connection level, a relatively short safe distance is set. For a vehicle with a low connection level, a relatively long safe distance is set.

The configuration information may further include an information filtering rule, used to filter second request information that does not match a service capability of the second device. In this way, the second device may filter request information sent by a vehicle that does not match a service capability of a current vehicle (that is, a vehicle in which the second device is located), to avoid a waste of resources. For example, the current vehicle does not support cooperative platooning driving. Therefore, a platooning request sent by a surrounding vehicle will be not uploaded to an application layer.

(4) second target information of the second device.

The first target information received by the second device may further be used to determine a service capability set (that is, the second target information) to be sent by the second device. For example, when determining, based on the first target information, that a wireless access type of the first device is LTE-V2X SL only, the second device may determine a wireless access type of a provided service as LTE-V2X SL to cooperate with the first device. Alternatively, when the wireless access type of the first device is LTE-V2X SL and NR-V2X SL, while the second device supports only LTE-V2X SL, the second device may notify, in the second target information, the first device of a capability supported by the second device, so that the first device can provide a service through LTE-V2X SL.

(5) a sending manner of the second target information of the second device.

In this embodiment, a second device may determine, based on received first target information, the capability of a first device to execute a first service, configuration of a safety (or cooperation) policy of the second device, and another communication or cooperation policy related to the first device. This resolves the problem of enormous communication complexity and low efficiency resulted from difficulties in identifying a specific capability of one device by another involved in V2X.

Optionally, after the first information is determined, the method further includes at least one of the following:
sending second information to the first target device; or
sending the second target information.

In an optional embodiment of the present disclosure, the second device may determine, based on the received first target information, connection information and/or a version of a supported protocol of each first device around the second device. In a case in which the connection information indicates that no first device has the connection capability, or in a case in which the version of the supported protocol indicates that the version of the supported protocol of no first device is consistent with a version of a supported protocol of the second device, the second device stops sending a connection message and/or the second target information, or the second device adjusts a frequency of sending the connection message and/or the second target information.

That is, the second device may determine, based on information (that is, the received first target information) about surroundings, whether to send a connection message or whether to send a service capability set of the second device (that is, the second target information). For example, the second device is an RSU. If no vehicle within a coverage range of the RSU has a connection capability, the RSU stops sending a connection message and/or the service capability set. If all vehicles within the coverage range of the RSU are vehicles that support a YD/T3709-2020 protocol, and a version of a supported protocol of the RSU is a T/CSAE 53-2017 version, the RSU stops sending the connection message and/or the service capability set.

Optionally, before the sending second information to the first target device, the method further includes at least one of the following:
(1) determining content of the second information.

Specifically, before sending the second information to the first target device, the second device may select a type of the second information to be sent. For example, the second device is an RSU. If a surrounding vehicle of the RSU supports only a scenario of a Day1, the RSU may send only an RSM message. If the surrounding vehicle is a vehicle that supports both the Day1 and Day2, the RSU may send both an RSM message and an SSM message. If the surrounding vehicle is a vehicle that supports only the Day2, the RSU may send only an SSM message.

(2) determining a type of the first service to be executed.

That is, the second device may determine, based on the first target information, whether to trigger a related application and determine a type of the application. Specifically, before triggering the application, the second device may determine whether a surrounding vehicle or a RSU can meet an expected condition. If the vehicle or the RSU meets the expected condition, the second device triggers the related application. If the vehicle or the RSU does not meet the expected condition, the second device may request cooperation from another surrounding vehicle until the expected condition is met, and then trigger the related application. For example, the second device is an OBU of a vehicle A. The vehicle A requests to change to the right lane. If no vehicle supports the Day2 within a specific range of the right lane, the vehicle A cannot trigger a cooperative lane change application of V2V, and can only wait for an occasion or can only trigger a cooperative lane change application of V2I.

In an optional embodiment, the second device may adjust an application triggered by the second device to an application supported by a first device in a surrounding area. For example, the second device is an OBU. If the second device is about to execute the first service, after analysis according to a first target message is performed, the following several cases may exist.
(1) In a case in which only an OBU in the first device has the capability to execute the first service, only an application of V2V corresponding to the first service is triggered.

For example, the first service is cooperative lane change. If a vehicle B supports a cooperative lane change but an RSU does not supports the cooperative lane change, a vehicle A directly triggers a V2V cooperation application, that is, a cooperative lane change request sent by the OBU of the vehicle A includes a cooperative lane change request of V2V

(2) In a case in which only an RSU in the first device has the capability to execute the first service, only an application of V2I corresponding to the first service is triggered.

For example, if a vehicle B does not support a cooperative lane change but the RSU supports the cooperative lane change , a vehicle A subsequently triggers a V2I cooperation application, that is, a cooperative lane change request sent by the OBU of the vehicle A includes a V2I cooperation request.

(3) In a case in which at least one OBU and at least one RSU in the first device have the capability to execute the first service, an application of V2V or V2I corresponding to the first service is triggered according to a preset rule.

For example, the second device is an OBU of a vehicle A. If both a vehicle B and an RSU support the cooperative lane change, the vehicle A may determine, based on the preset rule, to trigger a cooperative lane change application of V2V or V2I.

For another example, if neither the vehicle B nor the RSU supports the cooperative lane change scenario, the vehicle A stops triggering the application.

(3) determining a sending manner of the second information.

In this embodiment, before the second information is sent, the content of the second information is determined based on the first target information. For example, the second device determines, based on information about the surrounding traffic conditions (that is, the first target information sent by the first device and the like), a type of the second information to be sent.

In an optional embodiment, the second device determines, based on an intelligence level and a connection level of a surrounding vehicle, the second information to be sent. For example, the second device is an RSU. If there is an automated driving vehicle whose intelligence level is higher than a first level within a coverage range of the RSU, in a case in which the vehicle requires a high-precision map, the RSU may send a map message to the OBU (that is, the second device) of a vehicle in a format of a high-precision map. If an intelligence level of a vehicle within the coverage range of the RSU is less than or equal to the first level, the RSU only needs to send a format of a standard-precision map. The first level depends on specific situations, for example, is set to L3.

The first target information includes service capability information. The service capability information includes first service capability information and/or second service capability information. The first service capability information is used to indicate a currently activated service capability of the first device. The second service capability information is used to indicate a currently inactivated service capability of the first device.

In this embodiment, the first target information is understood as a service capability set of the first device. The service capability set is device characteristic information, a capability of the first device (that is, a currently activated service capability of the first device). Alternatively, the service capability set is a function (or a service) that can be supported by the first device, a function (or a service) that the first device currently wants to support, or the like, that is, a currently inactivated service capability of the first device.

It should be noted that for specific content, explanations, implementations, and examples of the first target information (that is, the device characteristic information and the service capability information) in this embodiment of the present disclosure, reference can be made to the target information in Embodiment 1, and details are not described herein again.

In an optional embodiment of the present disclosure, the service capability information includes at least one of the following: service information, a message set, service category information, service level information, AID information, PSID information, or privacy protection requirement information. The service capability information further includes one of the following: role information, capability information, or protocol information. The device characteristic information includes at least one of the following: a device type, owner information, a wireless access type, an intelligence level, connection information, a version of a supported protocol, sensing capability information, positioning capability information, platooning capability information, function safety level information, or a sensing data type.

In this embodiment of the present disclosure, by receiving first target information sent by a first device, a second device may identify the capability of the first device to execute a first service. Therefore, the second device can determine configuration of a safety (or cooperation) policy of the second device based on a status of the capability of the first device to execute the first service, or determine whether to trigger an application and to trigger which type of application, or determine another communication or cooperation policy related to the first device. In this way, the problem of enormous communication complexity and low efficiency resulted from difficulties in identifying a specific capability of one device by another involved in V2X can be solved. Therefore, spectrum utilization can be improved.

### Embodiment 4

As shown in FIG. 3, an embodiment of the present disclosure provides an information processing apparatus 300 for V2X. The apparatus 300 is applied to a first device and includes:
a sending module 301, configured to send first target information, where the first target information is used to determine a capability of the first device to execute a first service.

The first target information includes service capability information.

The service capability information includes first service capability information and/or second service capability information. The first service capability information is used to indicate a currently activated service capability of the first device. The second service capability information is used to indicate a currently inactivated service capability of the first device.

Optionally, the apparatus further includes:
a first obtaining module, configured to obtain second target information corresponding to at least one second device, where the second target information is used to determine a capability of the second device to execute the first service; and
a first processing module, configured to update the first target information according to the second target information or adjust a sending manner of the first target information to the second target information.

Optionally, the first processing module includes:
a first adjustment unit, configured to: in a case in which a level of the capability of the second device to execute the first service is lower than a level of the capability of the first device to execute the first service, adjust a service capability of the first device to be level with the level of the capability of the second device; and
a capability request unit, configured to: in a case in which the first service is executable by a currently inactivated service capability of the second device, add capability request information to the first target information, where the capability request information is used to request the second device to activate the capability to execute the first service.

Optionally, the processing module includes:
a first processing unit, configured to delete the first service capability information corresponding to the first service;
a second processing unit, configured to stop sending the first target information; and
a second adjustment unit, configured to adjust a frequency of sending the first target information.

Optionally, the apparatus further includes:
a second obtaining module, configured to obtain second target information corresponding to at least one second device, where the second target information is used to determine a capability of the second device to execute the first service;
a second processing module, configured to: in a case in which the first device is about to execute the first service, determine, from the at least one second device based on the second target information, a first target device that has a service capability to execute the first service; and
a third processing module, configured to perform communication related to the first service with the first target device.

Embodiment 4 of the present disclosure corresponds to the method in Embodiment 2. All implementations in Embodiment 2 are applicable to embodiments of the information processing apparatus, and a same technical effect can be achieved.

### Embodiment 5

As shown in FIG. 4, an embodiment of the present disclosure provides an information processing apparatus 400 for V2X, including:
a receiving module 401, configured to receive first target information sent by at least one first device, where the first target information is used to determine a capability of the first device to execute a first service; and
a determining module 402, configured to determine first information based on the first target information.

Optionally, the first information includes at least one of the following:
the capability of the first device to execute the first service;
identity information of a first target device whose capability to execute the first service matches the second device;
configuration information of the second device related to the first device;
second target information of the second device; or
a sending manner of the second target information of the second device.

Optionally, the apparatus further includes:
a first sending module, configured to send second information to the first target device; and
a second sending module, configured to send the second target information.

Optionally, the apparatus further includes:
a first determining module, configured to determine content of the second information;
a second determining module, configured to determine a type of the first service to be executed; and
a third determining module, configured to determine a sending manner of the second information.

Embodiment 5 of the present disclosure corresponds to the method in Embodiment 3. All implementations in Embodiment 3 are applicable to embodiments of the information processing apparatus, and a same technical effect can be achieved.

### Embodiment 6

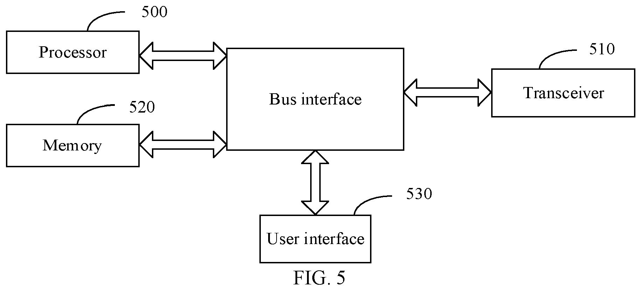

To better implement the foregoing objectives, as shown in FIG. 5, Embodiment 6 of the present disclosure further provides a device. The device is a first device, and includes:
a processor 500, and a memory 520 connected to the processor 500 through a bus interface, where the memory 520 is configured to store a program and data that are used when the processor 500 performs operations, and the processor 500 invokes the program and data that are stored in the memory 520 and executes the program.

A transceiver 510 is connected to the bus interface, and is configured to receive and send data under control of the processor 500. The processor 500 is configured to read the program in the memory 520 and perform the following steps:
sending first target information, where the first target information is used to determine a capability of the first device to execute a first service.

In FIG. 5, a bus architecture may include any number of interconnected buses and bridges. Specifically, various circuits of one or more processors represented by the processor 500 and a memory represented by the memory 520 are connected. In the bus architecture, various other circuits such as a peripheral device, a voltage regulator, and a power management circuit may be connected. These are all well known in the art, and therefore are not further described in this specification. The bus interface provides an interface. The transceiver 510 may be a plurality of components, including a transmitter and a transceiver, and provides units for communicating with a variety of other apparatuses on a transmission medium. For different terminals, a user interface 530 may alternatively be an interface capable of externally or internally connecting a required device, including but not limited to, a keypad, a display, a speaker, a microphone, a joystick, or the like. The processor 500 is responsible for management of the bus architecture and general processing, and the memory 520 may store data that is used when the processor 500 performs operations.

The first target information includes service capability information.

The service capability information includes first service capability information and/or second service capability information. The first service capability information is used to indicate a currently activated service capability of the first device. The second service capability information is used to indicate a currently inactivated service capability of the first device.

Optionally, the processor 500 is further configured to: obtain second target information corresponding to at least one second device, where the second target information is used to determine a capability of the second device to execute the first service; and
update the first target information according to the second target information or adjust a sending manner of the first target information to the second target information.

Optionally, in a case in which the first device obtains the second target information within a preset time period, and the second target information indicates that the capability of the second device to execute the first service matches the capability of the first device to execute the first service, when updating the first target information according to the second target information, the processor 500 is specifically configured to:
in a case in which a level of the capability of the second device to execute the first service is lower than a level of the capability of the first device to execute the first service, adjust a service capability of the first device to be level with the level of the capability of the second device; or
in a case in which the first service is executable by a currently inactivated service capability of the second device, add capability request information to the first target information, where the capability request information is used to request the second device to activate the capability to execute the first service.

Optionally, in a case in which the first device does not obtain the second target information within a preset time period, or in a case in which the second target information indicates that a capability of no second device to execute the first service matches the capability of the first device to execute the first service, when adjusting a sending manner of the first target information to the second target information, the processor 500 is specifically configured to:
delete the first service capability information corresponding to the first service;
stop sending the first target information; or
adjust a frequency of sending the first target information.

Optionally, the processor 500 is further configured to:
obtain second target information corresponding to at least one second device, where the second target information is used to determine a capability of the second device to execute the first service;
in a case in which the first device is about to execute the first service, determine, from the at least one second device based on the second target information, a first target device that has a service capability to execute the first service; and
perform communication related to the first service with the first target device.

According to the first device provided in the present disclosure, by sending first target information, a second device around the first device may identify a capability of the first device to execute a first service. Therefore, the second device can determine configuration of a safety (or cooperation) policy of the second device based on a status of the capability of the first device to execute the first service, determine whether to trigger an application and to trigger which type of application, or determine another communication or cooperation policy related to the first device. In this way, the problem of enormous communication complexity and low efficiency resulted from difficulties in identifying a specific capability of one device by another involved in V2X can be solved. Therefore, spectrum utilization can be improved.

### Embodiment 7

To better implement the foregoing objectives, Embodiment 7 of the present disclosure further provides a device. The device is a second device, and may use a same structure as that of the first device shown in FIG. 5, including:
a processor 500, and a memory 520 connected to the processor 500 by using a bus interface, where the memory 520 is configured to store a program and data that are used when the processor 500 performs operations, and the processor 500 invokes the program and data that are stored in the memory 520 and executes the program.

A transceiver 510 is connected to the bus interface, and is configured to receive and send data under control of the processor 500. The processor 500 is configured to read the program in the memory 520 and perform the following steps:
receiving first target information sent by at least one first device, where the first target information is used to determine a capability of the first device to execute a first service; and
determining first information based on the first target information.

In FIG. 5, a bus architecture may include any number of interconnected buses and bridges. Specifically, various circuits of one or more processors represented by the processor 500 and a memory represented by the memory 520 are connected. In the bus architecture, various other circuits such as a peripheral device, a voltage regulator, and a power management circuit may be connected. These are all well known in the art, and therefore are not further described in this specification. The bus interface provides an interface. The transceiver 510 may be a plurality of components, including a transmitter and a transceiver, and provides units for communicating with a variety of other apparatuses on a transmission medium. For different terminals, a user interface 530 may alternatively be an interface capable of externally or internally connecting a required device, including but not limited to, a keypad, a display, a speaker, a microphone, a joystick, or the like. The processor 500 is responsible for management of the bus architecture and general processing, and the memory 520 may store data that is used when the processor 500 performs operations.

Optionally, the first information includes at least one of the following:
the capability of the first device to execute the first service;
identity information of a first target device whose capability to execute the first service matches the second device;
configuration information of the second device related to the first device;
second target information of the second device; or
a sending manner of the second target information of the second device.

Optionally, the processor 500 is further configured to:
sending second information to the first target device; or
sending the second target information.

Optionally, the processor 500 is further configured to:
determine content of the second information;
determine a type of the first service to be executed; or
determine a sending manner of the second information.

By receiving first target information sent by a first device, the second device provided in the present disclosure can identify a capability of the first device to execute a first service, and further can determine configuration of a safety (or cooperation) policy of the second device based on a status of the capability of the first device to execute the first service, determine whether to trigger an application and to trigger which type of application, or determine another communication or cooperation policy related to the first device. In this way, the problem of enormous communication complexity and low efficiency resulted from difficulties in identifying a specific capability of one device by another involved in V2X can be solved. Therefore, spectrum utilization can be improved.

A person skilled in the art may understand that all or some of the steps of the foregoing embodiments may be implemented by hardware, or may be implemented by a computer program indicating related hardware, and the computer program includes instructions for executing some or all of the steps of the foregoing methods. In addition, the computer program may be stored in a readable storage medium, and the storage medium may be any form of storage medium.

In addition, a specific embodiment of the present disclosure further provides a computer-readable storage medium, on which a computer program is stored. When the program is executed by a processor, steps of the method in Embodiment 2 are implemented, or steps of the method in Embodiment 3 are implemented. A same technical effect can be achieved. To avoid repetition, details are not described herein again.

In addition, it should be noted that, in the apparatuses and methods of the present disclosure, it is obvious that each component or step may be decomposed and/or recombined. The decomposition and/or the recombination shall be considered equivalent solutions to the present disclosure. In addition, the steps for performing the foregoing series of processing may be performed in a chronological order as described, but do not necessarily need to be performed in a chronological order, and some of the steps may be performed in parallel or independently of one another. A person of ordinary skill in the art can understand that all or any of the steps or components of the methods and apparatuses of the present disclosure may be implemented in any computing apparatus (including a processor, a storage medium, or the like) or a network of a computing apparatus by using hardware, firmware, software, or a combination thereof, which can be implemented by a person of ordinary skill in the art by using their basic programming skills when reading the description of the present disclosure.

Therefore, the objectives of the present disclosure may also be achieved by running a program or a group of programs on any computing apparatus. The computing apparatus may be a well-known general apparatus. Therefore, the objectives of the present disclosure may also be achieved by providing only a program product including program code for implementing the methods or apparatuses. **In** other words, such a program product is also included in the present disclosure, and a storage medium that stores such a program product is also included in the present disclosure. Obviously, the storage medium may be any well-known storage medium or any storage medium developed in the future. It should also be noted that in the apparatuses and methods of the present disclosure, it is obvious that each component or step may be decomposed and/or recombined. The decomposition and/or the recombination shall be considered equivalent solutions to the present disclosure. **In** addition, the steps for performing the foregoing series of processing may be performed in a chronological order as described, but do not necessarily need to be performed in a chronological order. Some of the steps may be performed in parallel or independently of one another.

It should be noted that the foregoing module division is merely a logical function division. **In** practical implementation, all or some of the modules may be integrated into one physical entity, or may be physically separated. **In** addition, these modules may be implemented in a form of software invoked by a processing element; or may all be implemented in a form of hardware; or some modules may be implemented in a form of software invoked by a processing element, and some modules may be implemented in a form of hardware. For example, a determining module may be a separately disposed processing element, or may be integrated into a chip of a foregoing apparatus for implementation. **In** addition, the determining module may be stored in a memory of the foregoing apparatus in a form of program code, and a processing element of the foregoing apparatus invokes the program code and executes a function of the determining module. An implementation of another module is similar. **In** addition, all or some of the modules may be integrated together, or may be independently implemented. The processing element herein may be an integrated circuit having a signal processing capability. **In** an implementation process, the steps in the foregoing methods or the foregoing modules may be completed by an integrated logic circuit of hardware in the processor element or instructions in a form of software.

For example, modules, units, subunits, or submodules may be configured to implement one or more integrated circuits in the foregoing methods, for example, one or more application-specific integrated circuits (Application Specific Integrated Circuit, ASIC), or one or more digital signal processors (Digital Signal Processor, DSP), or one or more field-programmable gate arrays (Field Programmable Gate Array, FPGA), or the like. For another example, when a module is implemented in the form of program code being scheduled by a processing element, the processing element may be a general-purpose processor, for example, a central processing unit (Central Processing Unit, CPU) or another processor capable of invoking the program code. For another example, these modules may be integrated and implemented in a form of a system-on-a-chip (system-on-a-chip, SOC).

The terms "first", "second" and the like in this specification and claims of the present disclosure are used to distinguish between similar objects, rather than to describe a particular order or a sequential order. It should be understood that the data used in this way may be interchangeable under appropriate circumstances such that embodiments of the present disclosure described herein are implemented, for example, in an order different from that illustrated or described herein. In addition, the terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device. In addition, in this specification and claims, "and/or" is used to indicate at least one of connected objects. For example, A and/or B and/or C represents the following seven cases: Only A is included, only B is included, only C is included, both A and B exist, both B and C exist, both A and C exist, and A, B and C all exist. Similarly, "at least one of A and B" used in this specification and claims should be understood as "only A is included, only B is included, or both A and B exist".

The foregoing descriptions are merely the preferred implementations of the present disclosure. It should only be noted that those of ordinary skill in the art may further make various improvements and modifications without departing from the principles of the present disclosure, and these improvements and modifications also fall within the protection scope of the present disclosure.

## Claims

1. An information processing method for V2X, applied to a first device, wherein the method comprises:
sending (11) first target information, wherein the first target information is used to determine a capability of the first device to execute a first service wherein the first target information comprises service capability information,
**characterized in that**:
the service capability information comprises second service capability information, and the second service capability information is used to indicate a set of currently inactivated service capabilities of the first device.

2. The method according to claim 1, further comprising:
obtaining second target information corresponding to at least one second device, wherein the second target information is used to determine a capability of the second device to execute the first service; and
updating the first target information according to the second target information or adjusting a sending manner of the first target information to the second target information.

3. The method according to claim 2, wherein in a case in which the first device obtains the second target information within a preset time period, and the second target information indicates that the capability of the second device to execute the first service matches the capability of the first device to execute the first service, the updating the first target information according to the second target information comprises one of the following:
in a case in which a level of the capability of the second device to execute the first service is lower than a level of the capability of the first device to execute the first service, adjusting a service capability of the first device to be consistent with the level of the capability of the second device; or
in a case in which the first service is executable by a currently inactivated service capability of the second device, adding capability request information to the first target information, wherein the capability request information is used to request the second device to activate the capability to execute the first service.

4. The method according to claim 2, wherein in a case in which the first device does not obtain the second target information within a preset time period, or in a case in which the second target information indicates that a capability of each second device to execute the first service does not match the capability of the first device to execute the first service, the adjusting a sending manner of the first target information to the second target information comprises one of the following:
deleting first service capability information corresponding to the first service, wherein the first service capability information is used to indicate a set of currently activated service capabilities of the first device;
stopping sending the first target information; or
adjusting a frequency of sending the first target information.

5. The method according to claim 1, further comprising:
obtaining second target information corresponding to at least one second device, wherein the second target information is used to determine a capability of the second device to execute the first service;
in a case in which the first device is about to execute the first service, determining, from the second device based on the second target information, a first target device that has a service capability to execute the first service; and
performing communication related to the first service with the first target device.

6. An information processing method for V2X, applied to a second device, wherein the method comprises:
receiving first target information sent by at least one first device, wherein the target information is used to determine a capability of the first device to execute a first service, the first target information comprises service capability information,
**characterized in that**:
the service capability information comprises second service capability information, and the second service capability information is used to indicate a set of currently inactivated service capabilities of the first device.

7. The method according to claim 6, further comprising:
sending second target information to the at least one first device, wherein the second target information is used to determine a capability of the second device to execute the first service.

8. The method according to claim 6, wherein the service capability information comprises at least one of the following:
service information, a message set, service category information, service level information, AID information, PSID information, privacy protection requirement information, role information, a quantity of devices supported by a service, or protocol information.

9. A communications system for V2X, comprising a first device and a second device, wherein the first device and the second device are configured to communicate based on target information, and the target information is used to determine a capability of a second target device to execute a target service, the second target device is configured to send the target information, wherein the target information comprises service capability information, and wherein the first device has means to act as second target device by sending the target information to the second device, and the second device has means to act as second target device by sending the target information to the first device, and **characterized in that**:
the service capability information comprises second service capability information, the second service capability information is used to indicate a set of currently inactivated service capabilities of the second target device.

10. The system according to claim 9, wherein the service capability information comprises at least one of the following:
service information, a message set, service category information, service level information, AID information, PSID information, privacy protection requirement information, role information, a quantity of devices supported by a service, or protocol information.

11. The system according to claim 9, wherein the first target information further comprises device characteristic information, the device characteristic information comprises at least one of the following:
a device type, owner information, a wireless access type, an intelligence level, connection information, a version of a supported protocol, sensing capability information, positioning capability information, platooning capability information, function safety level information, or a sensing data type.

12. A device, comprising a transceiver (510), a memory (520), a processor (500), and a computer program stored in the memory and executable on the processor (500), wherein when the processor (500) executes the computer program, the steps of the information processing method for V2X according to any one of claims 1 to 5 are implemented, or the steps of the information processing method for V2X according to any one of claims 6 to 8 are implemented.

13. A computer-readable storage medium, on which a computer program is stored, wherein when the computer program is executed by a processor, the steps of the information processing method for V2X according to any one of claims 1 to 5 are implemented, or the steps of the information processing method for V2X according to any one of claims 6 to 8 are implemented.

## Patentansprüche

1. Ein Informationsverarbeitungsverfahren für V2X, das auf eine erste Vorrichtung angewendet wird, wobei das Verfahren Folgendes beinhaltet:
Senden (11) erster Zielinformationen, wobei die ersten Zielinformationen verwendet werden, um eine Fähigkeit der ersten Vorrichtung zum Ausführen eines ersten Dienstes zu bestimmen, wobei die ersten Zielinformationen Dienstfähigkeitsinformationen beinhalten,
**dadurch gekennzeichnet, dass**:
die Dienstfähigkeitsinformationen zweite Dienstfähigkeitsinformationen beinhalten und die zweiten Dienstfähigkeitsinformationen verwendet werden, um einen Satz gegenwärtig inaktivierter Dienstfähigkeiten der ersten Vorrichtung anzugeben.

2. Verfahren gemäß Anspruch 1, das ferner Folgendes beinhaltet:
Erhalten zweiter Zielinformationen, die mindestens einer zweiten Vorrichtung entsprechen, wobei die zweiten Zielinformationen verwendet werden, um eine Fähigkeit der zweiten Vorrichtung zum Ausführen des ersten Dienstes zu bestimmen; und
Aktualisieren der ersten Zielinformationen gemäß den zweiten Zielinformationen oder Anpassen einer Sendeweise der ersten Zielinformationen an die zweiten Zielinformationen.

3. Verfahren gemäß Anspruch 2, wobei in einem Fall, in dem die erste Vorrichtung die zweiten Zielinformationen innerhalb eines voreingestellten Zeitraums erhält und die zweiten Zielinformationen angeben, dass die Fähigkeit der zweiten Vorrichtung zum Ausführen des ersten Dienstes mit der Fähigkeit der ersten Vorrichtung zum Ausführen des ersten Dienstes übereinstimmt, das Aktualisieren der ersten Zielinformationen gemäß den zweiten Zielinformationen eines von Folgendem beinhaltet:
in einem Fall, in dem ein Niveau der Fähigkeit der zweiten Vorrichtung zum Ausführen des ersten Dienstes niedriger ist als ein Niveau der Fähigkeit der ersten Vorrichtung zum Ausführen des ersten Dienstes, Anpassen einer Dienstfähigkeit der ersten Vorrichtung, damit sie mit dem Niveau der Fähigkeit der zweiten Vorrichtung konsistent ist; oder
in einem Fall, in dem der erste Dienst durch eine gegenwärtig inaktivierte Dienstfähigkeit der zweiten Vorrichtung ausführbar ist, Hinzufügen von Fähigkeitsanforderungsinformationen zu den ersten Zielinformationen, wobei die Fähigkeitsanforderungsinformationen verwendet werden, um die zweite Vorrichtung aufzufordern, die Fähigkeit zum Ausführen des ersten Dienstes zu aktivieren.

4. Verfahren gemäß Anspruch 2, wobei in einem Fall, in dem die erste Vorrichtung die zweiten Zielinformationen nicht innerhalb eines voreingestellten Zeitraums erhält, oder in einem Fall, in dem die zweiten Zielinformationen angeben, dass eine Fähigkeit jeder zweiten Vorrichtung zum Ausführen des ersten Dienstes nicht mit der Fähigkeit der ersten Vorrichtung zum Ausführen des ersten Dienstes übereinstimmt, das Anpassen einer Sendeweise der ersten Zielinformationen an die zweiten Zielinformationen eines von Folgendem beinhaltet:
Löschen erster Dienstfähigkeitsinformationen, die dem ersten Dienst entsprechen, wobei die ersten Dienstfähigkeitsinformationen verwendet werden, um einen Satz gegenwärtig aktivierter Dienstfähigkeiten der ersten Vorrichtung anzugeben;
Stoppen des Sendens der ersten Zielinformationen; oder Anpassen einer Häufigkeit des Sendens der ersten Zielinformationen.

5. Verfahren gemäß Anspruch 1, das ferner Folgendes beinhaltet:
Erhalten zweiter Zielinformationen, die mindestens einer zweiten Vorrichtung entsprechen, wobei die zweiten Zielinformationen verwendet werden, um eine Fähigkeit der zweiten Vorrichtung zum Ausführen des ersten Dienstes zu bestimmen;
in einem Fall, in dem die erste Vorrichtung im Begriff ist, den ersten Dienst auszuführen, Bestimmen, von der zweiten Vorrichtung basierend auf den zweiten Zielinformationen, einer ersten Zielvorrichtung, die eine Dienstfähigkeit zum Ausführen des ersten Dienstes aufweist; und
Durchführen von Kommunikation, die sich auf den ersten Dienst bezieht, mit der ersten Zielvorrichtung.

6. Ein Informationsverarbeitungsverfahren für V2X, das auf eine zweite Vorrichtung angewendet wird, wobei das Verfahren Folgendes beinhaltet:
Empfangen erster Zielinformationen, die von mindestens einer ersten Vorrichtung gesendet werden, wobei die Zielinformationen verwendet werden, um eine Fähigkeit der ersten Vorrichtung zum Ausführen eines ersten Dienstes zu bestimmen, wobei die ersten Zielinformationen Dienstfähigkeitsinformationen beinhalten,
**dadurch gekennzeichnet, dass**:
die Dienstfähigkeitsinformationen zweite Dienstfähigkeitsinformationen beinhalten und die zweiten Dienstfähigkeitsinformationen verwendet werden, um einen Satz gegenwärtig inaktivierter Dienstfähigkeiten der ersten Vorrichtung anzugeben.

7. Verfahren gemäß Anspruch 6, das ferner Folgendes beinhaltet:
Senden zweiter Zielinformationen an die mindestens eine erste Vorrichtung, wobei die zweiten Zielinformationen verwendet werden, um eine Fähigkeit der zweiten Vorrichtung zum Ausführen des ersten Dienstes zu bestimmen.

8. Verfahren gemäß Anspruch 6, wobei die Dienstfähigkeitsinformationen mindestens eines von Folgendem beinhalten:
Dienstinformationen, einen Nachrichtensatz, Dienstkategorieinformationen, Dienstniveauinformationen, AID-Informationen, PSID-Informationen, Datenschutzanforderungsinformationen, Rolleninformationen, eine Menge von Vorrichtungen, die von einem Dienst unterstützt werden, oder Protokollinformationen.

9. Ein Kommunikationssystem für V2X, das eine erste Vorrichtung und eine zweite Vorrichtung beinhaltet, wobei die erste Vorrichtung und die zweite Vorrichtung konfiguriert sind, um basierend auf Zielinformationen zu kommunizieren, und die Zielinformationen verwendet werden, um eine Fähigkeit einer zweiten Zielvorrichtung zum Ausführen eines Zieldienstes zu bestimmen, wobei die zweite Zielvorrichtung konfiguriert ist, um die Zielinformationen zu senden, wobei die Zielinformationen Dienstfähigkeitsinformationen beinhalten und wobei die erste Vorrichtung Mittel aufweist, um als zweite Zielvorrichtung zu fungieren, indem die Zielinformationen an die zweite Vorrichtung gesendet werden, und die zweite Vorrichtung Mittel aufweist, um als zweite Zielvorrichtung zu fungieren, indem die Zielinformationen an die erste Vorrichtung gesendet werden, und
**dadurch gekennzeichnet, dass**:
die Dienstfähigkeitsinformationen zweite Dienstfähigkeitsinformationen beinhalten und die zweiten Dienstfähigkeitsinformationen verwendet werden, um einen Satz gegenwärtig inaktivierter Dienstfähigkeiten der zweiten Zielvorrichtung anzugeben.

10. System gemäß Anspruch 9, wobei die Dienstfähigkeitsinformationen mindestens eines von Folgendem beinhalten:
Dienstinformationen, einen Nachrichtensatz, Dienstkategorieinformationen, Dienstniveauinformationen, AID-Informationen, PSID-Informationen, Datenschutzanforderungsinformationen, Rolleninformationen, eine Menge von Vorrichtungen, die von einem Dienst unterstützt werden, oder Protokollinformationen.

11. System gemäß Anspruch 9, wobei die ersten Zielinformationen ferner Vorrichtungseigenschaftsinformationen beinhalten und die Vorrichtungseigenschaftsinformationen mindestens eines von Folgendem beinhalten:
einen Vorrichtungstyp, Eigentümerinformationen, einen Drahtloszugangstyp, ein Intelligenzniveau, Verbindungsinformationen, eine Version eines unterstützten Protokolls, Erfassungsfähigkeitsinformationen, Positionierungsfähigkeitsinformationen, Platooning-Fähigkeitsinformationen, Funktionssicherheitsniveauinformationen oder einen Erfassungsdatentyp.

12. Eine Vorrichtung, die einen Sendeempfänger (510), einen Speicher (520), einen Prozessor (500) und ein Computerprogramm, das in dem Speicher gespeichert ist und auf dem Prozessor (500) ausführbar ist, beinhaltet, wobei, wenn der Prozessor (500) das Computerprogramm ausführt, die Schritte des Informationsverarbeitungsverfahrens für V2X gemäß einem der Ansprüche 1 bis 5 implementiert werden oder die Schritte des Informationsverarbeitungsverfahrens für V2X gemäß einem der Ansprüche 6 bis 8 implementiert werden.

13. Ein computerlesbares Speichermedium, auf dem ein Computerprogramm gespeichert ist, wobei, wenn das Computerprogramm durch einen Prozessor ausgeführt wird, die Schritte des Informationsverarbeitungsverfahrens für V2X gemäß einem der Ansprüche 1 bis 5 implementiert werden oder die Schritte des Informationsverarbeitungsverfahrens für V2X gemäß einem der Ansprüche 6 bis 8 implementiert werden.

## Revendications

1. Un procédé de traitement d'informations pour V2X, appliqué à un premier dispositif, le procédé comprenant :
l'envoi (11) de premières informations cibles, les premières informations cibles étant utilisées pour déterminer une capacité du premier dispositif à exécuter un premier service, les premières informations cibles comprenant des informations de capacité de service,
**caractérisé en ce que** :
les informations de capacité de service comprennent des deuxièmes informations de capacité de service, et les deuxièmes informations de capacité de service sont utilisées pour indiquer un ensemble de capacités de service actuellement inactivées du premier dispositif.

2. Le procédé selon la revendication 1, comprenant en outre :
l'obtention de deuxièmes informations cibles correspondant à au moins un deuxième dispositif, les deuxièmes informations cibles étant utilisées pour déterminer une capacité du deuxième dispositif à exécuter le premier service ; et
l'actualisation des premières informations cibles selon les deuxièmes informations cibles ou l'adaptation, aux deuxièmes informations cibles, d'une manière d'envoyer les premières informations cibles.

3. Le procédé selon la revendication 2, dans lequel dans le cas où le premier dispositif obtient les deuxièmes informations cibles au cours d'une période de temps prédéfinie, et où les deuxièmes informations cibles indiquent que la capacité du deuxième dispositif à exécuter le premier service est en adéquation avec la capacité du premier dispositif à exécuter le premier service, l'actualisation des premières informations cibles selon les deuxièmes informations cibles comprend l'une des opérations suivantes :
dans le cas où un niveau de la capacité du deuxième dispositif à exécuter le premier service est plus bas qu'un niveau de la capacité du premier dispositif à exécuter le premier service, l'adaptation d'une capacité de service du premier dispositif pour qu'elle soit cohérente avec le niveau de la capacité du deuxième dispositif ; ou
dans le cas où le premier service est exécutable par une capacité de service actuellement inactivée du deuxième dispositif, l'ajout d'informations de demande de capacité aux premières informations cibles, les informations de demande de capacité étant utilisées pour demander au deuxième dispositif d'activer la capacité à exécuter le premier service.

4. Le procédé selon la revendication 2, dans lequel dans le cas où le premier dispositif n'obtient pas les deuxièmes informations cibles au cours d'une période de temps prédéfinie, ou dans le cas où les deuxièmes informations cibles indiquent qu'une capacité de chaque deuxième dispositif à exécuter le premier service n'est pas en adéquation avec la capacité du premier dispositif à exécuter le premier service, l'adaptation, aux deuxièmes informations cibles, d'une manière d'envoyer les premières informations cibles comprend l'une des opérations suivantes :
la suppression de premières informations de capacité de service correspondant au premier service, les premières informations de capacité de service étant utilisées pour indiquer un ensemble de capacités de service actuellement activées du premier dispositif ;
l'arrêt de l'envoi des premières informations cibles ; ou
l'adaptation d'une fréquence d'envoi des premières informations cibles.

5. Le procédé selon la revendication 1, comprenant en outre :
l'obtention de deuxièmes informations cibles correspondant à au moins un deuxième dispositif, les deuxièmes informations cibles étant utilisées pour déterminer une capacité du deuxième dispositif à exécuter le premier service ;
dans le cas où le premier dispositif est sur le point d'exécuter le premier service, la détermination, parmi le deuxième dispositif sur la base des deuxièmes informations cibles, d'un premier dispositif cible qui a une capacité de service à exécuter le premier service ; et
la réalisation d'une communication relative au premier service avec le premier dispositif cible.

6. Un procédé de traitement d'informations pour V2X, appliqué à un deuxième dispositif, le procédé comprenant :
la réception de premières informations cibles envoyées par au moins un premier dispositif, les informations cibles étant utilisées pour déterminer une capacité du premier dispositif à exécuter un premier service, les premières informations cibles comprenant des informations de capacité de service,
**caractérisé en ce que** :
les informations de capacité de service comprennent des deuxièmes informations de capacité de service, et les deuxièmes informations de capacité de service sont utilisées pour indiquer un ensemble de capacités de service actuellement inactivées du premier dispositif.

7. Le procédé selon la revendication 6, comprenant en outre :
l'envoi de deuxièmes informations cibles à l'au moins un premier dispositif, les deuxièmes informations cibles étant utilisées pour déterminer une capacité du deuxième dispositif à exécuter le premier service.

8. Le procédé selon la revendication 6, dans lequel les informations de capacité de service comprennent au moins un des éléments suivants :
des informations de service, un ensemble de messages, des informations de catégorie de service, des informations de niveau de service, des informations AID, des informations PSID, des informations d'exigences de protection de la confidentialité, des informations de rôle, une quantité de dispositifs pris en charge par un service, ou des informations de protocole.

9. Un système de communication pour V2X, comprenant un premier dispositif et un deuxième dispositif, le premier dispositif et le deuxième dispositif étant configurés pour communiquer sur la base d'informations cibles, et les informations cibles étant utilisées pour déterminer une capacité d'un deuxième dispositif cible à exécuter un service cible, le deuxième dispositif cible étant configuré pour envoyer les informations cibles, les informations cibles comprenant des informations de capacité de service, et le premier dispositif comportant des moyens pour faire office de deuxième dispositif cible par envoi des informations cibles au deuxième dispositif, et le deuxième dispositif comportant des moyens pour faire office de deuxième dispositif cible par envoi des informations cibles au premier dispositif, et
**caractérisé en ce que** :
les informations de capacité de service comprennent des deuxièmes informations de capacité de service, les deuxièmes informations de capacité de service sont utilisées pour indiquer un ensemble de capacités de service actuellement inactivées du deuxième dispositif cible.

10. Le système selon la revendication 9, dans lequel les informations de capacité de service comprennent au moins un des éléments suivants :
des informations de service, un ensemble de messages, des informations de catégorie de service, des informations de niveau de service, des informations AID, des informations PSID, des informations d'exigences de protection de la confidentialité, des informations de rôle, une quantité de dispositifs pris en charge par un service, ou des informations de protocole.

11. Le système selon la revendication 9, dans lequel les premières informations cibles comprennent en outre des informations caractéristiques de dispositif, les informations caractéristiques de dispositif comprennent au moins un des éléments suivants :
un type de dispositif, des informations de propriétaire, un type d'accès sans fil, un niveau d'intelligence, des informations de connexion, une version d'un protocole pris en charge, des informations de capacité de détection, des informations de capacité de positionnement, des informations de capacité de circulation en peloton, des informations de niveau de sécurité fonctionnelle, ou un type de données de détection.

12. Un dispositif, comprenant un émetteur-récepteur (510), une mémoire (520), un processeur (500), et un programme d'ordinateur stocké dans la mémoire et exécutable sur le processeur (500), dans lequel lorsque le processeur (500) exécute le programme d'ordinateur, les étapes du procédé de traitement d'informations pour V2X selon l'une quelconque des revendications 1 à 5 sont mises en œuvre, ou les étapes du procédé de traitement d'informations pour V2X selon l'une quelconque des revendications 6 à 8 sont mises en œuvre.

13. Un support de stockage lisible par ordinateur, sur lequel est stocké un programme d'ordinateur, dans lequel lorsque le programme d'ordinateur est exécuté par un processeur, les étapes du procédé de traitement d'informations pour V2X selon l'une quelconque des revendications 1 à 5 sont mises en œuvre, ou les étapes du procédé de traitement d'informations pour V2X selon l'une quelconque des revendications 6 à 8 sont mises en œuvre.
